# EUROPÄISCHE PATENTSCHRIFT

(11) **EP 3 169 993 B1**
(45) Veröffentlichungstag und Bekanntmachung des Hinweises auf die Patenterteilung: **05.12.2018**
(21) Anmeldenummer: 15739244.0
(22) Anmeldetag: 15.07.2015
(51) Int. Cl.: G01N 27/30

(54) **REFERENZELEKTRODENANORDNUNG FÜR ELEKTROCHEMISCHEN SENSOR UND ELEKTROCHEMISCHER SENSOR**
REFERENCE ELECTRODE ARRANGEMENT FOR ELECTROCHEMICAL SENSOR AND ELECTROCHEMICAL SENSOR
ENSEMBLE D'ÉLECTRODES DE RÉFÉRENCE POUR UN CAPTEUR ÉLECTROCHIMIQUE ET CAPTEUR ÉLECTROCHIMIQUE

(30) Priorität: 16.07.2014 DE 102014109995
(43) Veröffentlichungstag der Anmeldung: 24.05.2017
(73) Patentinhaber: Hamilton Bonaduz AG, 7402 Bonaduz (CH)
(72) Erfinder: SCHÖNFUSS, Dirk, CH-7015 Tamins (CH); ARQUINT, Philipp, CH-7402 Bonaduz (CH); CAMINADA-CAVELIER, Clara, CH-7000 Chur (CH)
(74) Vertreter: Schmitt-Nilson Schraud Waibel Wohlfrom Patentanwälte Partnerschaft mbB
(86) Internationale Anmeldenummer: PCT/EP2015/066130
(87) Internationale Veröffentlichungsnummer: WO 2016/008908

(56) Entgegenhaltungen:
- DE-A1-102010 063 031
- US-A- 3 103 480
- US-A- 4 981 567

## Beschreibung

Die vorliegende Erfindung betrifft das Gebiet der elektrochemischen Sensoren. Solche Sensoren werden zur Analyse von insbesondere flüssigen Prozessmedien verwendet, um bestimmte Eigenschaften der Prozessmediums quantitativ zu bestimmen, insbesondere den pH-Wert, das Redoxpotential, und/oder das Vorkommen bestimmter Ionensorten im Prozessmedium. Die mittels elektrochemischer Sensoren bestimmbaren Eigenschaften werden im Folgenden unter dem Begriff "elektrochemische Messgröße" zusammengefasst.

Zur Bestimmung elektrochemischer Messgrößen werden jeweils geeignete Messelektroden verwendet, die die Eigenschaft haben, dass sich bei Kontakt der Messelektrode mit dem Prozessmedium ein elektrochemisches Potential einstellt, das von der jeweils zu bestimmenden elektrochemischen Größe abhängt, beispielsweise dem pH-Wert oder der Konzentration einer bestimmten lonensorte. Dieses Potential wird als Messsignal erfasst, weshalb derartige Sensoren auch potentiometrische Sensoren genannt werden. Die Messelektrode kann als ionenselektive Elektrode ausgebildet sein, die unmittelbar mit dem zu untersuchenden Prozessmedium in Kontakt gelangt, so dass die ionenselektive Elektrode und das Prozessmedium unmittelbar ein Redox-System bilden, dessen elektrochemisches Potential von der Konzentration einer bestimmten lonensorte im Prozessmedium abhängt. Vielfach wird aber die Messelektrode selbst bereits ein System aus Ableitelektrode in Kontakt mit einem Innenelektrolyten aufweisen, wobei der Innenelektrolyt dann in elektrolytischen Kontakt mit dem Prozessmedium gelangt. Beispielsweise misst man bei pH-Elektroden in der Regel eine vom pH-Wert des Prozessmediums abhängige Potentialdifferenz über eine Glasmembran, die sich zwischen dem Prozessmedium und dem Innenelektrolyten der Messelektrode befindet. Der Innenelektrolyt bildet dann ein Puffersystem und ist so gewählt, dass sich über die Messmembran hinweg eine der gewünschten elektrochemischen Messgröße möglichst proportionale elektrische Potentialdifferenz einstellt. Ganz allgemein soll im Folgenden ein System mit Messelektrode und ggf. zugehörigem Innenelektrolyt/Messmembran als Messhalbzelle eines elektrochemischen Sensors bezeichnet werden, wobei die Messelektrode in einem Messhalbzellenraum vorgesehen ist, in dem sich auch der Innenelektrolyt befindet.

Weil elektrische Potentiale immer nur als Differenz zu einem Bezugspotential erfasst werden können, benötigt ein elektrochemischer Sensor immer eine Messelektrode und eine weitere Referenzelektrode, die ein elektrochemisches Bezugspotential liefert als Bezugsgröße für das von der Messelektrode gelieferte Messsignal. Die Referenzelektrode umfasst ein Redoxsystem aus einer Referenzableitelektrode in Kontakt mit einem Referenzelektrolyten. Das Referenz-Redoxsystem wird so gewählt, dass sich bei Kontakt der Referenzableitelektrode mit dem Referenzelektrolyt ein bekanntes, möglichst stabiles und gut reproduzierbares elektrochemisches Potential einstellt. Ganz allgemein wird ein beliebiges Referenz-Redoxsystem der beschriebenen Art im Folgenden als Referenzhalbzelle eines elektrochemischen Sensors bezeichnet. Die Referenzhalbzelle umfasst einen Referenzhalbzellenraum, in dem sich die Referenzelektrode und der Referenzelektrolyt befindet. Das elektrochemische Potential der Referenzhalbzelle soll sich durch elektrolytischen Kontakt des Referenzelektrolyts mit dem Prozessmedium möglichst wenig ändern.

Gängige Referenzhalbzellen beruhen auf Elektroden zweiter Art, bei denen eine mit einem schwer löslichen Metallsalz überzogene Referenzableitelektrode aus Metall mit einem Referenzelektrolyt in Kontakt steht, der ein gut im Referenzelektrolyt lösliches, chemisch inertes Salz mit demselben Anion wie das des schwer löslichen Elektrodenüberzugs enthält. Der Referenzelektrolyt ist vielfach eine Flüssigkeit oder ein eher zähflüssiges Gel, insbesondere eine wässrige Salzlösung oder ein wässriges Gel eines bestimmten Salzes. Ein gängiges für Referenzelektroden verwendetes Redox-System, wie es auch zur Verwendung mit der vorliegenden Erfindung vorgesehen sein kann, besteht beispielsweise aus einer Ag-Elektrode mit einem Überzug aus AgCl, die in einen Referenzelektrolyt aus wässriger KCl eintaucht. Andere Redoxsysteme, die ebenfalls zur Verwendung mit der vorliegenden Erfindung in Frage kommen, beruhen auf Iod/Iodid-Redoxsystemen, oder auf Kalomel-Redoxsystemen (Hg/Hg₂Cl₂), jeweils mit geeigneten Referenzelektrolyten, die danach ausgewählt sind, dass der Referenzelektrolyt eine gute elektrische Leitfähigkeit besitzen sollte, chemisch neutral sein sollte und seine Ionen möglichst gleiche Beweglichkeit haben sollten.

Die Referenzhalbzelle muss zur Bestimmung der jeweiligen elektrochemischen Messgröße elektrolytisch in Kontakt mit dem zu untersuchenden Prozessmedium gebracht werden. Dann kann eine Spannungsdifferenz bestimmt werden, die der Differenz der elektrochemischen Potentiale der Referenzhalbzelle und der Messhalbzelle entspricht.

Das sich jeweils einstellende elektrochemische Potential zwischen Messhalbzelle und Prozessmedium sowie zwischen Referenzelektrode und Referenzelektrolyt ist von vielen Faktoren abhängig. Deshalb ist es erforderlich, bei Inbetriebnahme eines elektrochemischen Sensors zunächst eine Kalibrierung mit Lösungen bzw. Elektrolyten bekannter lonenaktivität (in der Regel werden hierzu genormte Pufferlösungen herangezogen) vorzunehmen, bevor aus der für ein unbekanntes Prozessmedium ermittelten Spannungsdifferenz die gewünschte elektrochemische Messgröße quantitativ ermittelt werden kann.

Das elektrochemische Potential der Referenzhalbzelle ist empfindlich gegenüber Umgebungsbedingungen, vor allem dann, wenn eine Referenzelektrode über längere Zeit gelagert wurde. Damit ein zur Messung erforderlicher elektrolytischer Kontakt des Referenzelektrolyten mit dem Prozessmedium hergestellt werden kann, steht die Referenzhalbzelle über eine Öffnung, ein Diaphragma oder eine ähnliche Verbindung mit ihrer Umgebung in Kontakt. Dies birgt die Gefahr, dass der Referenzelektrolyt bei längerer Lagerung ausläuft oder austrocknet, so dass die Referenzelektrode teilweise oder ganz nicht mehr in Kontakt mit Referenzelektrolyt steht. Dadurch wird das Gleichgewicht des Referenz-Redoxsystems beeinflusst, so dass bei Inbetriebnahme eines Sensors umständliche Maßnahmen erforderlich sind, bevor quantitative Bestimmungen möglich sind.

Die vorliegende Erfindung befasst sich insbesondere damit, eine verbesserte Referenzelektrodenanordnung für einen elektrochemischen Sensor der beschriebenen Art bereitzustellen. Daneben soll auch ein verbesserter elektrochemischer Sensor angegeben werden.

Die DE 10 2013 101 735 A1 zeigt eine potentiometrische Sensorvorrichtung mit in einem Referenzhalbzellenraum vorgesehener Referenzelektrode und in einem Messhalbzellenraum vorgesehener Messelektrode, zwischen denen bei elektrolytischem Kontakt mit einem Prozessmedium eine Potentialdifferenz erfasst wird. Die Messelektrode weist eine von dem Wert der zu analysierenden Größe, beispielsweise dem pH-Wert, eines Prozessmediums abhängige Messmembran auf. Die Referenzhalbzelle ist mit einer weitgehend trockenen oder wasserarmen Substanz (z.B. einem trockenen Elektrolytsalz) befüllt, die erst durch Kontakt mit Flüssigkeit den Referenzelektrolyten bildet. Auf diese Weise kommt es, zumindest bei sachgemäßer trockener Lagerung, nicht zu einem unkontrollierten Eintrocknen des Referenzelektrolyten. Allerdings muss der Referenzelektrolyt bei Inbetriebnahme des Sensors erst durch Zuführen von Flüssigkeit gebildet werden und es muss sich ein Redoxgleichgewicht mit der Referenzelektrode ausbilden.

Bei dem in DE 10 2010 063 031 A1 gezeigten potentiometrischen Sensor ist der Referenzhalbzellenraum im Lagerzustand durch eine Wand gegenüber der Umgebung abgeschlossen und mit einem Referenzelektrolyt gefüllt. Dadurch soll vermieden werden, dass der Referenzelektrolyt während einer Trockenlagerung mit der Umgebung in Kontakt gelangt und ausläuft, so dass der Referenzhalbzellenraum ggf. austrocknet. Allerdings ist der Sensor in seinem Lagerzustand nicht funktionsfähig, weil der Referenzelektrolyt nicht in elektrolytischen Kontakt mit dem Prozessmedium gelangen kann. Um den Sensor in einen Betriebszustand zu überführen, ist in einer den Referenzhalbzellenraum begrenzenden Wand eine Durchgangsöffnung ausbildbar, durch die Referenzelektrolyt aus dem Referenzhalbzellenraum ausströmen kann und dadurch einen elektrolytischen Kontakt zwischen dem Referenzelektrolyt und einem den Referenzhalbzellenraum umgebenden Prozessmedium herstellen kann. Als Mittel zum Erzeugen der Durchgangsöffnung ist ein mechanisches Werkzeug zum Durchstoßen der Wand oder zum Entfernen eines Stopfens bzw. Verschlusses in der Wand vorgesehen. Die dadurch geschaffene Durchgangsöffnung ist in aller Regel nur schwer zu kontrollieren. Vor allem ist problematisch, dass in vielen Fällen eine sehr große Öffnung entsteht, durch die der Referenzelektrolyt vergleichsweise schnell und unkontrolliert aus dem Referenzhalbzellenraum ausläuft. Die Betriebsdauer des Sensors ist dann unter Umständen sehr kurz und nur schwer vorhersagbar. Diese Problematik stellt sich vor allem bei Verwendung von flüssigen Referenzelektrolyten wie KCl.

Aufgabe der Erfindung ist es, eine verbesserte Referenzelektrodenanordnung für einen elektrochemischen Sensor, insbesondere einen potentiometrischen Sensor, anzugeben, die eine besser definierte Betriebsdauer gewährleistet.

Zur Lösung der angegebenen Aufgabe wird eine Referenzelektrodenanordnung, insbesondere zur Verwendung bei einem elektrochemischen Sensor, insbesondere bei einem potentiometrischen Sensor, der vorangehend dargelegten Art, vorgeschlagen, die durch folgende Merkmale gekennzeichnet ist: Die Referenzelektrodenanordnung umfasst einen Referenzhalbzellenraum mit einer darin vorgesehenen Referenzelektrode. Der Referenzhalbzellenraum weist einen Vorratsraum auf, in dem sich jedenfalls in einem Lagerzustand der Referenzelektrodenanordnung ein Referenzelektrolyt befindet. Der Referenzhalbzellenraum weist ferner einen jedenfalls hinsichtlich Durchtritt von Referenzelektrolyt in eine Umgebung des Referenzhalbzellenraums durchlässigen Schleusenraum auf. In dem Lagerzustand der Referenzelektrodenanordnung ist der Vorratsraum von dem Schleusenraum hinsichtlich Durchtritt von Referenzelektrolyt getrennt. Die Referenzelektrodenanordnung ist derart ausgebildet, dass eine für Durchtritt von Referenzelektrolyt vom Vorratsraum in den Schleusenraum durchlässige Verbindung zwischen dem Vorratsraum und dem Schleusenraum geschaffen werden kann, um die Referenzelektrodenanordnung aus dem Lagerzustand in einen Betriebszustand zu überführen.

Die Referenzelektrodenanordnung bildet insbesondere eine Referenzhalbzelle eines elektrochemischen Sensors. Der Referenzhalbzellenraum kann beispielsweise von einem Gehäuse der Referenzelektrodenanordnung gebildet sein. Der Referenzelektrolyt kann flüssig oder gelartig sein, insbesondere kann der Referenzelektrolyt als wässrige Lösusung vorliegen, etwa in Form einer KCI-Lösung, wie sie in der Regel mit Ag/AgCl Elektroden verwendet wird (z.B. wird für pH-Sensoren sehr häufig eine 3,0 molare KCl-Lösung eingesetzt). Im Lagerzustand der Referenzelektrodenanordnung befindet sich der Referenzelektrolyt im Vorratsraum. Der Schleusenraum braucht im Lagerzustand noch nicht mit Referenzelektrolyt gefüllt zu sein und wird vorzugsweise auch noch keinen Referenzelektrolyt enthalten oder allenfalls Referenzelektrolyt in weitgehend trockener Form enthalten, etwa in Form eines trockenen Elektrolytsalzes. Das stellt sicher, dass die Oberfläche der Ableitelektrode der Referenzelektrode immer in elektrolytischem Kontakt mit dem Referenzelektrolyt steht, so dass der Gleichgewichtszustand des Redox-Systems Elektrode bzw. Elektrodenüberzug zu Referenzelektrolyt auch bei langer Lagerung des Sensors stabil bleibt. Zudem ist sichergestellt, dass dieses Gleichgewicht nicht von äußeren Einflüssen während der Lagerung beeinflusst wird, denn der Vorratsraum ist gegenüber der Umgebung abgeschlossen. Nennenswerter Schwund von Referenzelektrolyt aus dem Vorratsraum ist auch bei langer Lagerung nicht zu erwarten.

Im Betriebszustand des Sensors muss die Umgebung der Referenzelektrodenanordnung mit einem zu analysierenden Prozessmedium in Elektrolytverbindung gelangen, d.h. der Referenzelekrolyt muss in elektrolytischen Kontakt mit dem zu analysierenden Prozessmedium stehen. Dies ist erforderlich, um einen geschlossenen Stromkreis zwischen Messelektrode und Referenzelektrode herzustellen, in dem dann die Potentialdifferenz zwischen Messelektrode und Referenzelektrode zu einem elektrischen Strom führt. Dieser Stromkreis hat einen äußeren Teil, in welchem Strom zwischen den jeweiligen Ableitelektroden der Messelektrode und der Referenzelektrode und durch elektrische Bauteile zur Bestimmung der elektrischen Spannung zwischen Messelektrode und Referenzelektrode fließt. Der Stromkreis hat auch einen inneren Teil, in welchem Strom durch den Referenzelektrolyt, das Prozessmedium, und ggf. einen Innenelektrolyt der Messelektrode fließt. Die Messung verfälschenden Raumladungen und Diffusionspotentiale, wie sie vor allem an der Verbindung zwischen Referenzelektrolyt und Prozessmedium im inneren Stromkreis leicht auftreten können, sollen möglichst unterdrückt werden. Allerdings sollte zugleich auch vermieden werden, dass Prozessmedium den die Referenzelektrode umgebenden Referenzelekrolyt kontaminiert, bzw. dass der Referenzelektrolyt sich über ein bestimmtes Maß hinaus mit dem Prozessmedium vermischt. Aus diesem Grund ist es günstig, durch geeignet dimensionierte Drosseleinrichtungen dafür zu sorgen, dass ständig ein geringer Ausfluss von Referenzelektrolyt aus dem Referenzhalbzellenraum in das Prozessmedium vorhanden ist, dieser Fluss aber nur gering ist, zeitlich stabil bleibt sich vor allem während der Betriebsdauer des Sensors nicht umkehrt. Bei der erfindungsgemäßen Referenzelektrodenanordnung kann dies durch eine geeignete elektrolytische Verbindung zwischen dem Schleusenraum und der Umgebung der Referenzelektrodenanordnung erfolgen. Beispielsweise kann eine den Schleusenraum umgebende Wand eine geeignete Öffnung und/oder ein geeignetes Diaphragma, etwa aus einem porösen Material wie Keramik, Glas, Platin, oder aus faserartigem Material wie Kunststofffasern, Platindrähten, Metalldrähten, die falls gewünscht in Form von textilen Flächengebilden ausgebildet sein können, oder in Form eines Schliffdiaphragmas, aufweisen. Derartige Diaphragmen werden bei herkömmlichen Referenzhalbzellen zur Verbindung des Referenzhalbzellenraums mit der Umgebung eingesetzt und sind beispielsweise beschrieben in Helmuth Galster, "pH-Messung", Wiley-VCH, 1990, ISBN 23527278362.

Dann kann bei in das zu analysierende Prozessmedium eingetauchter Referenzelektrodenanordnung Referenzelektrolyt aus dem Schleusenraum in das Prozessmedium gelangen, wobei der Fluss des aus dem Schleusenraum austretenden Referenzelektrolyts gut festlegbar ist und damit die Betriebsdauer des Sensors entsprechend festgelegt werden kann, bei trotzdem stetigem und ausreichend großem Fluss des aus dem Schleusenraum in das Prozessmedium strömenden Referenzelektrolyts.

Damit der Referenzelektrolyt in den Schleusenraum gelangt, ist vorgesehen, dass zur Inbetriebnahme eine für Durchtritt von Referenzelektrolyt vom Vorratsraum in den Schleusenraum durchlässige Verbindung zwischen dem Vorratsraum und dem Schleusenraum geschaffen werden kann. Die somit vorgesehene Aufteilung des Referenzhalbzellenraums in einen Vorratsraum und einen Schleusenraum bietet den Vorteil, dass die bei Inbetriebnahme zu schaffende Elektrolyt- bzw. Fluidverbindung zwischen Vorratsraum und Schleusenraum kaum einen Einfluss auf die Betriebseigenschaften des Sensors mehr nimmt, sobald sie einmal hergestellt ist. Insbesondere hat diese Verbindung keinen Einfluss auf den sich im Betrieb einstellenden elektrolytischen Kontakt zwischen Referenzelektrolyt und Prozessmedium. Vielmehr ist der Fluss des aus dem Schleusenraum austretenden Referenzelektrolyts nur durch die zwischen Schleusenraum und Umgebung vorgesehene Elektrolytverbindung, beispielsweise ein Diaphragma der oben genannten Art, bestimmt.

Die Referenzelektrodenanordnung kann im Lagerzustand eine praktisch unbegrenzte Zeitdauer schadlos überstehen, weil der Referenzelektrolyt im Vorratsraum abgeschlossen gespeichert ist und ständig mit der Referenzelektrode in Kontakt bleibt. Erst wenn der Vorratsraum mit dem Schleusenraum in elektrolytischen Kontakt bzw. in Fluidverbindung gelangt, füllt sich auch der Schleusenraum mit Referenzelektrolyt, so dass Referenzelektrolyt aus dem Schleusenraum in die Umgebung der Referenzelektrodenanordnung gelangen kann. Der Fluss des aus dem Schleusenraum austretenden Referenzelektrolyten lässt sich über eine im Voraus ausgebildete Öffnung bzw. über Ausstattung des Schleusenraums mit einem Diaphragma bereits bei Herstellung recht genau einstellen. Damit kann man eine gewünschte Betriebsdauer ab Überführung der Referenzelektrodenanordnung in den Betriebszustand zuverlässig einhalten. Kontaminationsprobleme können durch Einsatz eines Diaphragmas zwischen Schleusenraum und Umgebung der Referenzelektrodenanaordnung, die in Kontakt mit dem Prozessmedium gelangt, effektiv vermieden werden.

Konstruktiv kann die Referenzelektrodenanordnung eine den Vorratsraum vom Schleusenraum hinsichtlich Durchtritt von Referenzelektrolyt trennende Wand aufweisen, in welcher eine Öffnung ausbildbar ist, um die Referenzelektrodenanordnung vom Lagerzustand in den Betriebszustand zu bringen. Die Wand kann aus dem selben Material hergestellt sein, wie ein den Vorratsraum und den Schleusenraum bildendes Gehäuse. Sie kann insbesondere einstückig mit diesem Gehäuse ausgebildet sein, beispielsweise aus einem geeigneten Kunststoff. Um eine Fluidverbindung zwischen Vorratsraum und Schleusenraum herzustellen, kann ferner ein Werkzeug zum Ausbilden einer Öffnung in der Wand, insbesondere zum Durchstoßen der Wand oder zum Entfernen eines vorbestimmten Verschlussmittels in der Wand, vorgesehen sein. Dieses Werkzeug kann der Referenzhalbzellenanordnung unmittelbar zugeordnet sein, etwa in der Form eines entfernbar an der Referenzhalbzellenanordnung angebrachten Einweg-Werkzeugs, das bei Inbetriebnahme der Referenzelektrodenanordnung aus seinem Lagerzustand entnommen werden kann. Das Werkzeug kann beispielsweise an dem Gehäuse der Referenzelektrodenanordnung angeformt oder angebracht sein in solchen einer Weise, dass es Sollbruchstellen aufweist, die eine spätere Entnahme zur Inbetriebnahme der Referenzelektrodenanordnung ermöglichen.

Das Werkzeug kann beispielsweise wenigstens einen Dorn zum Durchstoßen bzw. Durchbohren der Wand aufweisen. Alternativ kann das Werkzeug ein Betätigungselement zum Entfernen eines in der Wand vorgesehenen Verschlussstopfens, Ringspaltes oder dergleichen aufweisen.

Das Werkzeug kann fest mit einem den Vorratsraum und/oder den Schleusenraum umgebenden Gehäuse verbunden sein, etwa in der Art, dass ein an einer Spitze einer Betätigungsstange vorgesehenes Werkzeug der genannten Art zur Inbetriebnahme aus einer Ruhestellung gelöst werden kann und dann zum Durchstoßen, Durchbohren der Wand bzw. zum Entfernen eines in der Wand vorgesehenen Verschlusselements eingesetzt werden kann. In manchen Ausführungsformen kann das Werkzeug sogar als Teil der Referenzelektrodenanordnung ausgebildet sein, falls gewünscht sogar einstückig mit einem Bestandteil der Referenzelektrodenanordnung wie deren Gehäuse.

Besonders günstig ist es, wenn das Werkzeug auch bei in einen elektrochemischen Sensor eingebauter Referenzelektrodenanordnung betätigbar ist. Der Sensor kann dann vollständig zusammengebaut bleiben, solange sich die Referenzelektrodenanordnung in ihrem Lagerzustand befindet und braucht zur Inbetriebnahme nicht wieder teilweise auseinandergenommen zu werden. Es ist sogar möglich, den Sensor bereits vor seiner Inbetriebnahme in eine Prozessumgebung einzusetzen, beispielsweise in einen Prozessbehälter, in dem ein bestimmter Prozess ablaufen soll. Das ist besonders günstig, weil dann der elektrochemische Sensor samt Prozessbehälter lange vor dem geplanten Einsatz fertig montiert sein kann und ggf. auch entsprechenden Maßnahmen zur Reinigung, Sterilisation oder Ähnlichem unterzogen werden kann. Derartige Anforderungen bestehen häufig im Bereich biologischer, biotechnologischer oder pharmazeutischer Prozesse, bei denen es auf hohe Reinheit der Prozessumgebung ankommt.

Um den im Betrieb erforderlichen elektrolytischen Kontakt des Referenzelektrolyten mit dem zu untersuchenden Prozessmedium herzustellen, kann der Schleusenraum eine für Durchtritt von Referenzelektrolyt vom Schleusenraum in eine Umgebung der Referenzelektrodenanordnung durchlässige Öffnung aufweisen. Der Schleusenraum kann insbesondere mit einem für Durchtritt von Referenzelektrolyt vom Schleusenraum in eine Umgebung der Referenzelektrodenanordnung durchlässigen Diaphragma ausgerüstet sein. Das Diaphragma stellt den elektrischen Kontakt mit dem Prozessmedium her und ist so ausgebildet, dass ein nur geringer, aber dennoch stabiler Fluss an Referenzelektrolyt aus dem Schleusenraum austritt. Mittels geeigneter Diaphragmen lässt sich ein recht genau definierter Fluss an aus dem Schleusenraum austretendem Referenzelektrolyt einstellen. Außerdem unterdrückt ein Diaphragma Rückfluss *von* Prozessmedium in den Schleusenraum und damit möglicherweise einhergehende Kontaminationsprobleme.

In der Regel weist das Diaphragma eine Vielzahl enger Kapillaren auf. Sobald sich der Schleusenraum mit Referenzelektrolyt füllt, gelangt Referenzelektrolyt von der Innenseite des Referenzhalbzellenraums her mit dem Diaphragma in Kontakt. Durch die im Diaphragma wirkenden Kapillar-Kräfte wird das Diaphragma mit Referenzelektrolyt gefüllt und ein elektrolytischer Kontakt zu dem zu analysierenden Prozessmedium hergestellt, sobald das Diaphragma von außen in Kontakt mit dem Prozessmedium gelangt. Die Durchlässigkeit des Diaphragmas definiert dann für den verwendeten Referenzelektrolyten die Betriebsdauer der Referenzelektrodenanordnung nach der Füllung des Schleusenraumes mit Referenzelektrolyt. Grundsätzlich kann bei der Referenzelektrodenanordnung gemäß vorliegender Erfindung der Schleusenraum mit jeder Art von Diaphragma ausgestattet sein, wie sie für herkömmliche potentiometrische Sensoren verwendet werden, beispielsweise mit einem Diaphragma aus porösen Materialien wie Keramik, Glas, Sintermetall (z. B. Platinschwämme und dgl.), oder Kunststofffasern, Platindrähten, Metalldrähten. Auch Diaphragmen, bei denen ein enger Spalt mittels Glasschliff ausgebildet ist, kommen in Frage. Für Beispiele verwendbarer Diapragmen, siehe Helmuth Galster, "pH-Messung", Wiley-VCH, 1990, ISBN 23527278362. Ein Diaphragma der genannten Art kann beispielsweise in die im Schleusenraum ausgebildete Öffnung eingesetzt sein.

Der Referenzhalbzellenraum kann aus allen gängigen Materialien hergestellt sein, wie man sie für herkömmliche elektrochemische Sensoren verwendet, z.B. Glas. Ganz besonders günstig ist es, wenn der Referenzhalbzellenraum aus Kunststoff hergestellt ist. Gerade für Anwendungen mit besonders hohen Reinheitsanforderungen oder bei Prozessmedien, von denen eine starke Verschmutzungsgefahr oder Kontaminationsgefahr ausgeht, ist es wünschenswert, einen Sensor nur einmalig zu gebrauchen und nach Gebrauch wegzuwerfen, weil auf diese Weise Kontaminationsprobleme am sichersten unterdrückt werden können. Um sicherzustellen, dass der Sensor nicht mehrmalig gebraucht wird, geht man dabei oft so weit, den Sensor als Einweg-Bauteil auszubilden, d.h. als Bauteil, das nach einmal erfolgter Inbetriebnahme nicht wieder in den Lagerzustand zurück versetzt werden kann und dann erneut in Betrieb genommen werden kann. Jedenfalls soll ein solcher mehrmaliger Gebrauch bauartbedingt derart erschwert sein, dass er - falls überhaupt - jedenfalls allenfalls unter Inkaufnahme von Einschränkungen hinsichtlich der Leistungsfähigkeit möglich sein soll.

Damit das Redox-System aus Referenzelektrode bzw. einem ggf. vorhandenen Überzug der Referenzelektrode und Referenzelektrolyt auch bei längerer Lagerung immer in seinem Gleichgewichtszustand bleibt, ist es günstig, wenn die Referenzelektrode in den Vorratsraum hineinreicht, so dass die Referenzelektrode immer vom Referenzelektrolyt benetzt ist. Dabei ist es nicht notwendig, und in aller Regel auch nicht günstig, dass die Referenzelektrode bis in den Schleusenraum hinein reicht, denn der in den Schleusenraum hinein reichende Teil der Referenzelektrode wäre bei trockener Lagerung im Lagerzustand im Allgemeinen nicht mit Referenzelektrolyt in Kontakt.

Die Referenzelektrodenanordnung kann insbesondere derart ausgestaltet sein, dass sie durch Strahlung sterilisierbar ist, und zwar insbesondere in Anwesenheit des Referenzelektrolyten und/oder bei in einen zum einmaligen Gebrauch bestimmten Prozessbehälter eingesetztem elektrochemischem Sensor. Im Bereiche der Biologie, Biotechnologie oder Pharmazie werden Bauteile und Behältnisse, die besonders steril sein müssen, häufig einer Strahlungsbehandlung, insbesondere mit UV-Strahlung, unterzogen, um etwaige vorhandene Bakterien, Keime, oder Ähnliches abzutöten. Es ist dabei besonders günstig, wenn eine solche sterilisierende Behandlung unmittelbar vor dem Einsatz des Sensors bzw. Prozessbehälters zur Bestimmung einer elektrochemischen Messgröße erfolgt, um zu verhindern, dass nach erfolgter Sterilisation erneut Keime eingeschleppt werden.

Wie bereits angesprochen, betrifft die vorliegende Erfindung auch einen elektrochemischen Sensor, insbesondere einen potentiometrischen Sensor, umfassend wenigstens eine Messelektrodenanordnung mit einer Messelektrode, eine Referenzelektrodenanordnung mit einer Referenzelektrode und eine Anordnung zur Erfassung einer Potentialdifferenz zwischen der Messelektrode und der Referenzelektrode, wobei die Referenzelektrodenanordnung ausgebildet ist, wie hierin vorgeschlagen.

Ein solcher Sensor kann als Doppelmesszelle mit Referenzelektrodenanordung bzw. Referenzhalbzelle und separater Messelektrodenanordnung bzw. Messhalbzelle ausgebildet sein. Die Referenzelektrodenanordnung ist dann mit der Messelektrodenanordnung im Lagerzustand des Sensors entweder gar nicht oder allenfalls über den äußeren Schaltkreis elektrisch verbunden. Ein innerer Schaltkreis zwischen Referenzelektrode und Messelektrode wird erst dann geschlossen, wenn sowohl die Messelektrode als auch die Referenzelektrode in das zu untersuchende Prozessmedium eintauchen mit der Folge, dass sowohl der Referenzelektrolyt mit dem Prozessmedium in elektrischen Kontakt gelangt, als auch eine elektrische Verbindung zwischen dem Prozessmedium und einem Innenelektrolyt der Messelektrode oder der Messelektrode selbst entsteht.

In vielen Fällen, gerade auch bei zum nur einmaligen Gebrauch bestimmten Sensoren, wird es günstig sein, den Sensor als Einstabmesszelle mit in einem gemeinsamen Gehäuse integrierter Referenzelektrodenanordnung bzw. Referenzhalbzelle und Messelektrodenanordnung bzw. Messhalbzelle auszubilden.

Die Referenzelektrodenanordnung wie oben beschrieben eignet sich vor allem für elektrochemische Sensoren zur Erfassung des pH-Werts und/oder des Redoxpotentials und/oder der Konzentrationen einer Ionensorte in einem insbesondere flüssigen oder gelartigen Prozessmedium. Sensoren dieser Art sind bekannt, beispielsweise in der Art von Glasmembran-Sensoren zur Bestimmung des pH Werts von flüssigen oder gelartigen Prozessmedien.

Der elektrochemische Sensor kann insbesondere als Einwegmesszelle ausgebildet sein zum einmaligen Gebrauch zur Messung des pH-Werts, Redoxpotentials und/oder anderer Messgrößen in einem flüssigen oder gelartigen Prozessmedium. Dann ist es insbesondere günstig, wenn die Referenzelektrodenanordnung bei in einen Einwegbehälter (z.B. einen Einweg-Fermenter) des zum einmaligen Gebrauch bestimmten elektrochemischen Sensors eingebautem Zustand durch Strahlung sterilisierbar ist.

Die Erfindung wird nachfolgend anhand von erläuternden Ausführungsbeispielen unter Bezugnahme auf die beigefügten Zeichnungen näher erläutert. Es zeigt:
Fig. 1A: In schematischer und stark vereinfachter Ansicht eine Referenzelektrodenanordnung nach einem Ausführungsbeispiel der vorliegenden Erfindung im Lagerzustand.
Fig. 1B: In schematischer und stark vereinfachter Ansicht die Referenzelektrodenanordnung aus Fig. 1A im Betriebszustand.
Fig. 2A: In schematischer und stark vereinfachter Ansicht einen als Doppelzelle ausgebildeten elektrochemischen Sensor mit Referenzelektrodenanordnung nach einem Ausführungsbeispiel der vorliegenden Erfindung, im Lagerzustand.
Fig. 2B: In schematischer und stark vereinfachter Ansicht den elektrochemischen Sensor aus Fig. 2A im Betriebszustand.
Fig. 3.: In schematischer und stark vereinfachter Ansicht einen als Einstabmesskette ausgebildeten elektrochemischen Sensor mit Referenzelektrodenanordnung nach einem Ausführungsbeispiel der vorliegenden Erfindung, im Lagerzustand.

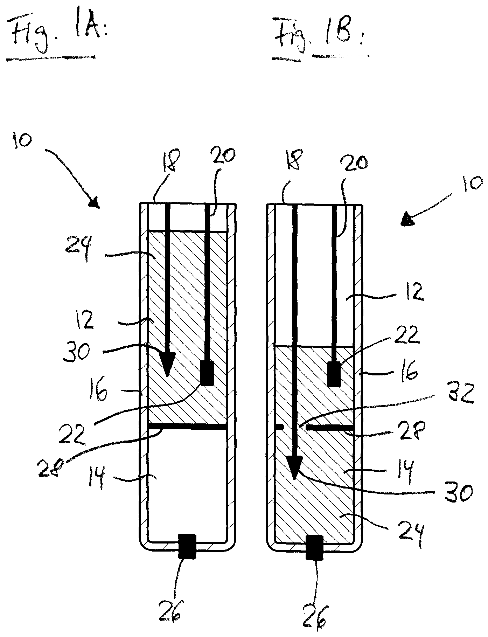

Fig. 1A und 1B zeigen in schematischer und stark vereinfachter Ansicht eine Referenzelektrodenanordnung 10 nach einem Ausführungsbeispiel der vorliegenden Erfindung. Fig. 1A zeigt die Referenzelektrodenanordnung 10 im Lagerzustand. Fig. 1B zeigt die Referenzelektrodenanordnung 10 im Betriebszustand. Die Referenzelektrodenanordnung 10 besitzt einen Referenzhalbzellenraum, welchen einen Vorratsraum 12 und einen Schleusenraum 14 umfasst. Der Referenzhalbzellenraum ist von einem Gehäuse 16 umgrenzt, das in dem vorliegenden Beispiel aus Kunststoff hergestellt ist, beispielsweise in Form eines Spritzgussteils. Das Gehäuse 16 ist an einer seiner Schmalseiten (in Fig. 1A und 1B an der Oberseite) mit einem Deckel 18 verschlossen, der ebenfalls aus Kunststoff hergestellt ist, insbesondere dem selben Kunststoff wie das Gehäuse 16.

Den Deckel 18 durchsetzt eine elektrische Durchführung 20, an deren in das Innere des Gehäuses 16 mündendem Ende eine elektrisch leitende Referenzableitelektrode 22 angeordnet ist. Die Referenzableitelektrode 22 befindet sich vollständig in dem Vorratsraum 16, der in dem in Fig. 1A gezeigten Lagerzustand weitgehend vollständig mit einem Referenzelektrolyt 24 gefüllt ist, und zwar so weit, dass zumindest in der in Fig. 1A gezeigten betriebsgemäßen Orientierung mit Deckel 18 nach oben gerichtet die Referenzableitelektrode 22 vollständig in den Referenzelektrolyt 24 eintaucht. Günstigerweise ist der Vorratsraum 16 in der Lagerstellung gemäß Fig. 1A so weit mit Referenzelektrolyt gefüllt, dass die Referenzableitelektrode 22 in jeder Orientierung der Referenzableitelektrodenanordnung 10 vollständig mit Referenzelektrolyt 24 benetzt ist. Das andere Ende der Durchführung 20 durchsetzt den Deckel 18 und ist elektrisch mit einem nicht gezeigten äußeren Schaltkreis zur Bestimmung einer elektrischen Spannung der Durchführung 20 relativ zu einer nicht näher dargestellten Messelektrode verbunden. Die Referenzableitelektrode 22 ist als Elektrode 2. Art ausgebildet, beispielsweise in der Konfiguration einer mit AgCl überzogenen Metallelektrode (z.B. aus Ag), die in eine wässrige KCl-Lösung (z.B. eine 3 molare KCI-Lösung) als Referenzelektrolyt 24 eintaucht. Alternative Redoxsysteme für die Kombination Referenzableitelektrode 22 und Referenzelektrolyt 24 sind Iod/Iodid, oder Kalomel (Hg/Hg₂Cl₂).

Der Schleusenraum 14 steht über ein in dem Gehäuse 16 eingesetztes Diaphragma 26 mit einer Umgebung der Referenzelektrodenanordnung 10 bezüglich des Referenzelektrolyten 24 in Fluidverbindung. Das Diaphragma 26 ist für den Referenzelektrolyten 24 wenigstens in Richtung aus dem Schleusenraum 14 in die Umgebung der Referenzelektrodenanordnung 10 durchlässig, wobei die Flussrate im Wesentlichen unabhängig von der Menge an Referenzelektrolyt 24 im Schleusenraum einstellbar ist. Gängige Diaphragmen für pH Sensoren sind beispielsweise beschrieben in Helmuth Galster, "pH-Messung", Wiley-V-CH, 1990, ISBN 23527278362.

In dem in Fig. 1A gezeigten Lagerzustand ist der Vorratsraum 12 fluiddicht bezüglich des Referenzelektrolyten 24 vom dem Schleusenraum 14 getrennt, und zwar durch eine Trennwand 28. Wegen der Trennwand 28 befindet sich im Lagerzustand der Referenzelektrodenanordnung 10 der Referenzelektrolyt 24 ausschließlich in dem Vorratsraum 12, nicht jedoch in dem Schleusenraum 14. Mit dem Bezugszeichen 30 ist in Fig. 1A und 1B ein Werkzeug bezeichnet, das schematisch durch einen Pfeil angedeutet ist. Das Werkzeug 30 besitzt einen Schaft an und ein an der Spitze des Schaftes angeordnetes Durchbohrwerkzeug, das in den Figuren lediglich schematisch durch einen Pfeil angedeutet ist. Das Durchbohrwerkzeug kann beispielsweise ein Dorn sein, der unter Ausübung von Kraft auf den Schaft durch die Trennwand 28 gebohrt werden kann, so dass er eine Öffnung 32 (siehe Fig. 1B) in der Trennwand hinterlässt, durch die der Referenzelektrolyt 24 vom Vorratsraum 12 in den Schleusenraum 14 fließen kann. Das Werkzeug kann auch als Schneidwerkzeug ausgebildet sein, durch das eine Öffnung bzw. ein Loch bestimmter Größe und Geometrie in die Trennwand 28 geschnitten werden kann. Ggf. kann die Trennwand 28 hierfür in geeigneter Weise vorgebildet sein, beispielsweise durch Vorsehen von Sollbruchstellen, an denen die Trennwand 28 unter Druckbeanspruchung bevorzugt bricht. Es ist auch denkbar, dass in der Trennwand 28 bereits im Lagerzustand ein Verschlusselement vorgesehen ist (z.B. ein Verschlussstopfen), welches durch Betätigung des Werkzeugs 30 (unter Ausübung von Druck- oder Zugkräften, falls gewünscht kombiniert mit Drehung des Werkzeugs 30 um seine Längsachse) aus seinem Sitz herausgezogen bzw. herausgedrückt werden kann, um so eine Öffnung zwischen Vorratsraum 12 und Schleusenraum 14 freizugeben. Fig. 1A deutet an, dass das die Spitze des Werkzeugs 30 im Lagerzustand mit Abstand zu der Trennwand 28 angeordnet ist. Denkbar wäre es auch, dass das die Werkzeugspitze bereits im Lagerzustand gemäß Fig 1A an der Trennwand 28 anliegt oder sogar mit dieser verbunden ist, und zwar an der Stelle, an der der Durchbruch bzw. die Öffnung erzeugt werden soll. Das vereinfacht die Handhabung zur Inbetriebsetzung erheblich.

Wie aus dem Vergleich der Fig. 1A und 1B ersichtlich, ist der Schaft des Werkzeugs 30 am Deckel 18 des Referenzhalbzellenraums festgelegt und zwar in einer solchen Weise, dass der Schaft in das Innere des Referenzhalbzellenraums hinein gedrückt werden kann, um mittels der Werkzeugspitze die Trennwand 28 zu durchstoßen. Das Werkzeug 30 kann ebenfalls aus Kunststoff hergestellt sein, weitgehend sogar aus demselben Kunststoff wie das Gehäuse 16. Sofern in der Trennwand 30 bestimmte Sollbruchstellen oder ein Verschlusselement vorgesehen sind, kann auch die Werkzeugspitze aus diesem Kunststoffmaterial hergestellt sein. Andernfalls empfiehlt es sich, wenigstens die Werkzeugspitze aus einem etwas härteren Material zu fertigen als die Trennwand 28.

Aus dem Vergleich von Fig. 1A und Fig. 1B erkennt man weiterhin, dass bei der Referenzelektrodenanordnung 10 nach Überführung in den Betriebszustand der Referenzelektrolyt 24 aus dem Vorratsraum 12 durch die neu geschaffene Öffnung 32 in den Schleusenraum 14 übertritt und diesen in der in Fig. 1B gezeigten Betriebsorientierung füllt. Hierfür ist es günstig, wenn der Schleusenraum 14 in Betriebsorientierung vertikal unterhalb des Vorratsraums 12 liegt, weil sich dann der Schleusenraum 14 unter Schwerkraftwirkung vollständig mit Referenzelektrolyt 24 füllt. Günstigerweise sollte im Vorratsraum 12 so viel Referenzelektrolyt 24 vorhanden sein, dass auch bei vollständig gefülltem Schleusenraum 14 der Pegel des Referenzelektrolyts 24 im Vorratsraum 12 noch so hoch ist, dass in der Betriebsorientierung die Referenzableitelektrode 22 möglichst vollständig von Referenzelektrolyt 24 benetzt bleibt. Unbedingt erforderlich ist die in Fig. 1A und 1B gezeigte Anordnung von Vorratsraum 12 und Schleusenraum 14 vertikal übereinander mit im Wesentlichen horizontal verlaufender Trennwand 30 nicht. Es ist auch denkbar beide Räume im Wesentlichen vertikal nebeneinander anzuordnen, so dass die Trennwand 30 im Wesentlichen vertikal verläuft, oder sogar den Vorratsraum 12 etwas unterhalb des Schleusenraums 14 anzuordnen (mit dann wieder im Wesentlichen horizontaler Trennwand 30). Wichtig ist dabei nur, dass nach Ausbilden des Durchbruchs bzw. der Öffnung 32 in der Trennwand 30 so viel Referenzelektrolyt in den Schleusenraum 14 gelangt, dass das dort vorgesehene Diaphragma 26, welches eine für Referenzelektrolyt 24 durchlässige Verbindung zur Umgebung der Referenzelektrodenanordnung 10 herstellt, von innen mit Referenzelektrolyt 24 benetzt wird. Außerdem sollte sichergestellt sein, dass bei vollständig mit Referenzelektrolyt 24 gefülltem Schleusenraum 14 oder bei Ausgleich der Pegel von Referenzelektrolyt 24 im Schleusenraum 14 und im Vorratsraum 12 noch die Referenzableitelektrode 22 weitgehend mit Referenzelektrolyt 24 benetzt bleibt.

Sobald der Referenzelektrolyt 24 den Schleusenraum 14 vollständig füllt, bzw. sobald das Diaphragma 26 von innen mit Referenzelektrolyt 24 benetzt ist, ist die Referenzelektrodenanordnung 10 betriebsbereit.

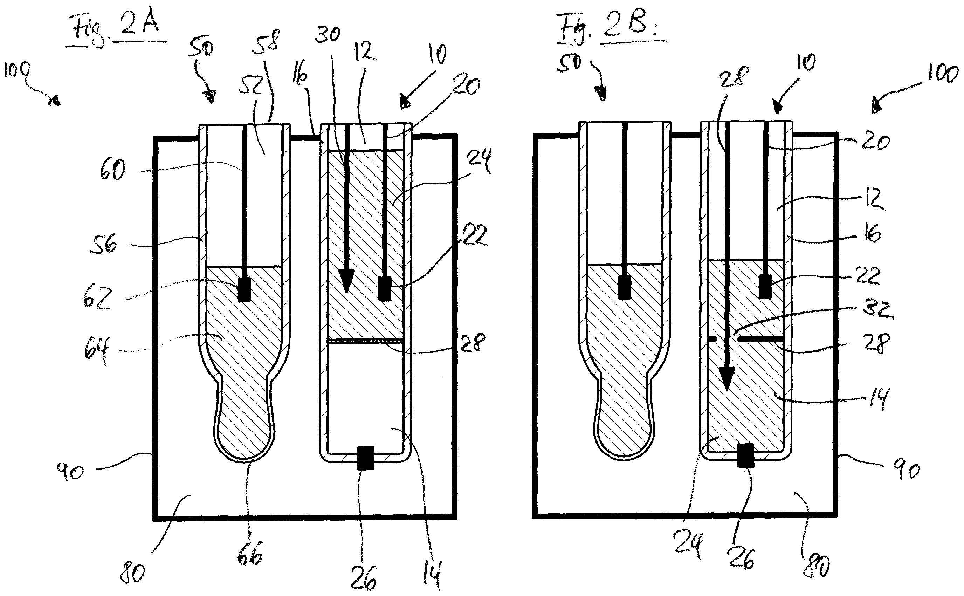

Fig. 2A und 2B zeigen in schematischer und stark vereinfachter Ansicht einen als Doppelzelle ausgebildeten elektrochemischen Sensor 100 mit einer Referenzelektrodenanordnung 10 gemäß Fig. 1A und 1B. Der Sensor 10 hat die Konfiguration einer Doppelzelle, wobei die Referenzelektrodenanordnung 10 eine Referenzhalbzelle bildet und eine zusätzliche Messelektrodenanordnung 50 vorhanden ist, die eine Messhalbzelle bildet. Die Messhalbzelle 50 ist bei der Doppelmesszellenkonfiguration gemäß Fig. 2A/2B weitgehend unabhängig von der Referenzhalbzelle 10 ausgebildet. Insbesondere ist die Messhalbzelle 50 in einem eigenen Gehäuse 56 untergebracht, das unabhängig von dem Gehäuse 16 der Referenzhalbzelle 10 ist. Die Messhalbzelle 50 und die Referenzhalbzelle 10 sind lediglich insoweit miteinander gekoppelt, als beide in einem gemeinsamen Prozessbehältnis 90 untergebracht sind, welche ein zu untersuchendes Prozessmedium 80 enthält. Dabei können das Gehäuse 16 mit der Referenzhalbzelle 10 ebenso wie das Gehäuse 56 mit der Messhalbzelle 50 jeweils fest an dem Prozessbehältnis 90 angebracht sein und auch zusammen mit diesem gelagert werden und sterilisiert werden, etwa durch Bestrahlung mit UV-Strahlung, falls gewünscht. Das Versetzen der Referenzhalbzelle 10 aus dem Lagerzustand gemäß Fig. 2A in den Betriebszustand gemäß Fig. 2B kann in eingebautem Zustand der Referenzhalbzelle 10 erfolgen, so dass keine Umbauten an dem elektrochemischen Sensor 100 einschließlich Prozessbehältnis 90 nötig sind.

Die Messhalbzelle 50 gemäß Fig. 2A/2B umfasst einen Messhalbzellenraum 52, in dem sich eine Messableitelektrode 62 und ein Innenelektrolyt 64 befinden. Die Messableitelektrode 62 sitzt an der in das Innere des Messhalbzellenraums 52 ragenden Spitze einer Messdurchführung 60, die ihrerseits an einem Deckel 58 befestigt ist und diesen durchsetzt. Der Deckel 58 und das Gehäuse 56 umgrenzen den Messhalbzellenraum 52. Die Messableitelektrode 62 ist in der in Fig. 2A/2B gezeigten Betriebsorientierung in den Innenelektrolyt 64 eingetaucht. In der in Fig. 2A/2B gezeigten Betriebsorientierung der Messhalbzelle 50 ist nicht nur die Messableitelektrode 62, sondern auch ein dem Deckel 58 gegenüber liegendes Ende des Messhalbzellenraums 52, in welchem das Gehäuse 56 eine Messmembran 66 bildet, von innen mit dem Innenelektrolyt 64 benetzt ist. Die Messmembran 66 taucht in das Prozessmedium 80 ein, so dass die Außenseite der Messmembran 66 vom Prozessmedium 80 benetzt ist.

Bei der in Fig. 2A/2B gezeigten Ausführungsform eines pH-Sensors kann die Messmembran 66 eine beliebige Membran sein, die bei Kontakt mit einem Prozessmedium 80 von der Außenseite der Membran 66 her eine elektrochemische Potentialdifferenz zwischen dem elektrochemischen Potential auf der Innenseite der Membran 66, d.h. zwischen Membran 66 und Innenelektrolyt 64, und dem elektrochemischen Potential auf der Außenseite der Membran 66, d.h. zwischen der Membran 66 und dem Prozessmedium 80, zeigt. Für pH-Sensoren sind eine Reihe von verschiedenen Glasmembranen bekannt, die diese Eigenschaft für unterschiedliche pH-Regionen erfüllen. Verwiesen sei in diesem Zusammenhang ebenfalls auf das bereits genannte Lehrbuch von Helmuth Galster, "pH-Messung", Wiley-VCH, 1990, ISBN 23527278362.

Die Konfiguration der Messhalbzelle 50 ist identisch für den in Fig. 2A gezeigten Sensor 100 im Lagerzustand und den in Fig. 2B gezeigten Sensor 100 im Betriebszustand. Der Übersichtlichkeit halber sind in Fig. 2A und 2B nur für die Konfiguration im Lagerzustand Bezugszeichen eingefügt, wobei es sich versteht, dass dieselben Bezugszeichen auch für die Konfiguration im Betriebszustand gem. Fig. 2B gelten.

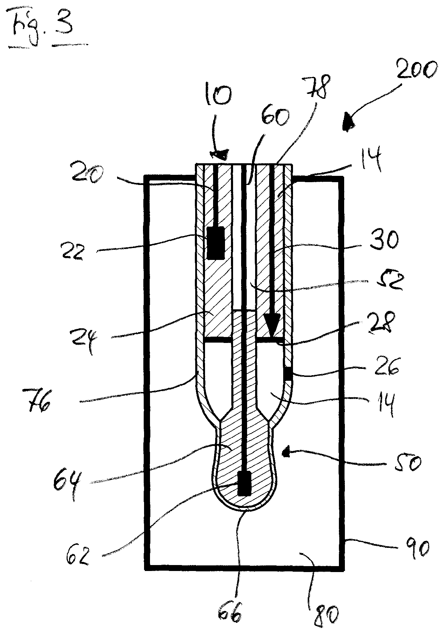

Hinsichtlich der Konfiguration der Referenzhalbzelle 10 im Lagerzustand (Fig. 2A) bzw. nach Überführen in den Betriebzustand (Fig. 2B) gilt das in Bezug auf Fig. 1A bzw. 1B Beschriebene entsprechend, so dass auf die Beschreibung zu diesen Figuren verwiesen wird, die für Fig. 2A und 2B ebenfalls gilt. Zu beachten ist, dass in Fig. 2A und 2B, wie auch in Fig. 3, hinsichtlich der Referenzhalbzelle 10 dieselben Bezugszeichen verwendet worden sind wie in Fig. 1A/Fig. 1B.

Fig. 3 zeigt außerdem in ebenfalls schematischer und stark vereinfachter Ansicht eine weitere Ausführungsform eines elektrochemischen Sensors in der Konfiguration einer Einstabmesskette 200. Bei diesem Sensor 200 sind eine Referenzelektrodenanordnung 10 wie vorangehend mit Bezugnahme zu Fig. 1A/1B, 2A/2B beschrieben sowie eine Messelektrodenanordnung 50 gemäß Fig. 2A/2B in einem gemeinsamen Gehäuse 76 mit einem gemeinsamen Deckel 78 vorgesehen, wobei die Messelektrodenanordnung 50, die eine Messhalbzelle bildet, in einem inneren Bereich um eine Längsachse herum angeordnet ist und von der Referenzelektrodenanordnung 10, die eine Referenzhalbzelle bildet, ringartig umgeben ist. Es wird wieder auf die Beschreibung der Figuren 1A/1B, 2A/2B Bezug genommen, mit dem Hinweis, dass in Fig. 3 dieselben Bezugszeichen verwendet worden sind wie in Fig. 1A/1B, 2A/2B soweit gleiche oder gleichartige Komponenten vorhanden sind.

Fig. 3 zeigt die Einstabmesskette 200 in einem Lagerzustand gemäß Fig. 1A und 2A, in welchem lediglich der Vorratsraum 14 der Referenzelektrodenanordnung 10 mit Referenzelektrolyt 24 gefüllt ist. Nach Überführung in den Betriebszustand hat die Referenzelekrodenanordnung 10 gemäß Fig. 3 dieselbe Konfiguration mit in der Trennwand 28 ausgebildeter Öffnung 32, durch die Referenzelektrolyt 24 in den Schleusenraum 14 gelangt, wie sie in Fig. 1B und 2B dargestellt ist, so dass zur Vermeidung von Wiederholungen auf diese Figuren und ihre zugehörige Beschreibung verwiesen werden kann.

Aus Fig. 3 ist ersichtlich, dass der Messhalbzellenraum 52 nun in seinem oberen Teil von dem Referenzhalbzellenraum mit Vorratsraum 12 und darunter liegendem Schleusenraum 14 umgeben ist und in seinem unteren Teil durch ein unteres Teil des gemeinsamen Gehäuses 70, das nun die Messmembran 66 bildet, begrenzt ist. Der Referenzhalbzellenraum ist auf seiner Außenseite von dem oberen Teil des Gehäuses 70 begrenzt und endet vertikal oberhalb des Teils des Gehäuses, in dem die Messmembran 66 ausgebildet ist. In diesem Bereich ist auf Höhe des unterhalb des Vorratsraums 12 liegenden Schleusenraums 14 auch das Diaphragma 26 vorgesehen, über das der Schleusenraum 14 mit einer Umgebung des Sensors, die in das Prozessmedium 80 eintaucht, in elektrolytischen Kontakt gelangt.

Auf diese Weise ist ein äußerst kompakt bauender Sensor 200 realisiert, bei dem zwischen Messelektrode 62 und Referenzelektrode 22 eine Potentialdifferenz im äußeren Stromkreis gemessen werden kann, die dem pH-Wert im Prozessmedium 80 entspricht.

## Patentansprüche

1. Referenzelektrodenanordnung (10) für einen elektrochemischen Sensor (100; 200), insbesondere für einen potentiometrischen Sensor, umfassend einen Referenzhalbzellenraum mit einer darin vorgesehenen Referenzelektrode (22),
wobei der Referenzhalbzellenraum einen Vorratsraum (12) aufweist, in dem sich jedenfalls in einem Lagerzustand der Referenzelektrodenanordnung (10) ein Referenzelektrolyt (24) befindet,
wobei der Referenzhalbzellenraum ferner einen jedenfalls hinsichtlich Durchtritt von Referenzelektrolyt (24) in eine Umgebung des Referenzhalbzellenraums durchlässigen Schleusenraum (12) aufweist,
wobei in dem Lagerzustand der Referenzelektrodenanordnung (10) der Vorratsraum (12) von dem Schleusenraum (14) hinsichtlich Durchtritt von Referenzelektrolyt (24) getrennt ist,
wobei die Referenzelektrodenanordnung (10) derart ausgebildet ist, dass eine für Durchtritt von Referenzelektrolyt (24) vom Vorratsraum (12) in den Schleusenraum (14) durchlässige Verbindung (32) zwischen dem Vorratsraum (12) und dem Schleusenraum (14) geschaffen werden kann, um die Referenzelektrodenanordnung (10) aus dem Lagerzustand in einen Betriebszustand zu überführen.

2. Referenzelektrodenanordnung (10) nach Anspruch 1, ferner aufweisend wenigstens eine den Vorratsraum (12) vom Schleusenraum (14) hinsichtlich Durchtritt von Referenzelektrolyt (24) trennende Wand (28), in welcher eine Öffnung (32) ausbildbar ist, um die Referenzelektrodenanordnung (10) vom Lagerzustand in den Betriebszustand zu bringen.

3. Referenzelektrodenanordnung (10) nach Anspruch 2, ferner aufweisend
ein Werkzeug (30) zum Ausbilden der Öffnung (32) in der Wand (28), insbesondere zum Durchstoßen der Wand (28) oder zum Entfernen eines vorbestimmten Verschlusselements in der Wand (28).

4. Referenzelektrodenanordnung (10) nach Anspruch 4, wobei das Werkzeug (30) bei in einen elektrochemischen Sensor (100; 200) eingebauter Referenzelektrodenanordnung (10) im Betrieb betätigbar ist.

5. Referenzelektrodenanordnung (10) nach Anspruch 3 oder 4, wobei das Werkzeug (30) als Teil der Referenzelektrodenanordnung (10) ausgebildet ist.

6. Referenzelektrodenanordnung (10) nach einem der Ansprüche 1 bis 5, wobei der Schleusenraum (14) eine für Durchtritt von Referenzelektrolyt (24) vom Schleusenraum (14) in eine Umgebung der Referenzelektrodenanordnung (10) durchlässige Öffnung aufweist.

7. Referenzelektrodenanordnung (10) nach einem der Ansprüche 1 bis 6, wobei der Schleusenraum (14) ein für Durchtritt von Referenzelektrolyt (24) vom Schleusenraum (14) in eine Umgebung der Referenzelektrodenanordnung (10) durchlässiges Diaphragma (26) aufweist.

8. Referenzelektrodenanordnung (10) nach Anspruch 7, wobei das Diaphragma (26) in die im Schleusenraum (14) ausgebildete Öffnung eingesetzt ist.

9. Referenzelektrodenanordnung (10) nach einem der Ansprüche 1 bis 8, ferner umfassend ein Kunststoffgehäuse (16; 76).

10. Referenzelektrodenanordnung (10) nach einem der Ansprüche 1 bis 9, wobei die Referenzelektrode (22) in den Vorratsraum (12), vorzugsweise jedoch nicht in den Schleusenraum (14), reicht.

11. Referenzelektrodenanordnung (10) nach einem der Ansprüche 1 bis 10, wobei die Referenzelektrodenanordnung (10) durch Strahlung sterilisierbar ist, insbesondere in Anwesenheit des Referenzelektrolyten (24) und/oder bei in einen Einwegbehälter (90) eines zum einmaligen Gebrauch bestimmten elektrochemischen Sensors (100; 200) eingebauter Referenzelektrodenanordnung (10).

12. Elektrochemischer Sensor (100; 200), insbesondere potentiometrischer Sensor, umfassend wenigstens eine Messelektrodenanordnung (50) mit einer Messelektrode (62), eine Referenzelektrodenanordnung (10) mit einer Referenzelektrode (22) und eine Anordnung zur Erfassung einer Potentialdifferenz zwischen der Messelektrode (62) und der Referenzelektrode (22), wobei die Referenzelektrodenanordnung (10) gemäß einem der vorangehenden Ansprüche ausgebildet ist.

13. Elektrochemischer Sensor (100) nach Anspruch 12, wobei der Sensor als Doppelmesszelle mit Referenzelektrodenanordung (10) und separater Messelektrodenanordnung (50) ausgebildet ist.

14. Elektrochemischer Sensor (200) nach Anspruch 12, wobei der Sensor als Einstabmesszelle mit in einem gemeinsamen Gehäuse (70) integrierter Referenzelektrodenanordnung (10) und Messelektrodenanordnung (50) ausgebildet ist.

15. Elektrochemischer Sensor (100; 200) nach einem der Ansprüche 12 bis 14, wobei der Sensor zur Erfassung des pH-Werts und/oder des Redoxpotentials und/oder der Konzentrationen einer Ionensorte in einem flüssigen Prozessmedium (80) ausgebildet ist.

16. Elektrochemischer Sensor (100; 200) nach einem der Ansprüche 12 bis 15, wobei der Sensor als Einwegmesszelle zum einmaligen Gebrauch zur Messung des pH-Werts, Redoxpotentials und/oder anderer Messgrößen in einem flüssigen Prozessmedium (80) ausgebildet ist.

## Claims

1. A reference electrode assembly (10) for an electrochemical sensor (100; 200), in particular for a potentiometric sensor, comprising a reference half-cell space having a reference electrode (22) provided therein,
the reference half-space comprising a storage space (12) in which a reference electrolyte (24) is provided at any rate in a storage state of the reference electrode assembly (10),
the reference half-cell space further comprising a lock space (14 that is permeable at any rate with respect to the passage of reference electrolyte (24) into an environment of the reference half-cell space,
the storage space (12), in the storage state of the reference electrode assembly (10), being separated from the lock space (14) with respect to the passage of reference electrolyte (24),
the reference electrode assembly (10) being designed such that a connection (32) permeable for the passage of reference electrolyte (24) from the storage space (12) to the lock space (14) can be created between the storage space (12) and the lock space (14) in order to transfer the reference electrode assembly (10) from the storage state to an operative state.

2. The reference electrode assembly (10) of claim 1,
further comprising at least one wall (28) separating the storage space (12) from the lock space (14) with respect to the passage of reference electrolyte (24), said wall (28) being adapted to have an opening (32) formed therein in order to bring the reference electrode assembly (10) from the storage state to the operative state.

3. The reference electrode assembly (10) of claim 2,
further comprising a tool (30) for forming said opening (32) in the wall (28), in particular for piercing the wall (28) or for removing a predetermined closure member in the wall (28).

4. The reference electrode assembly (10) of claim 3,
wherein the tool (30), in case of a reference electrode assembly (10) installed in an electrochemical sensor (100; 200), is adapted to be operated during operation.

5. The reference electrode assembly (10) of claim 3 or 4,
wherein said tool (30) is designed as part of the reference electrode assembly (10).

6. The reference electrode assembly (10) of any of claims 1 to 5,
wherein the lock space (14) comprises an opening that is permeable for the passage of reference electrolyte (24) from the lock space (14) into an environment of the reference electrode assembly (10).

7. The reference electrode assembly (10) of any of claims 1 to 6,
wherein the lock space (14) comprises a diaphragm (26) that is permeable for the passage of reference electrolyte (24) from the lock space (14) into an environment of the reference electrode assembly (10).

8. The reference electrode assembly (10) of claim 7,
wherein the diaphragm (26) is inserted into the opening formed in the lock space (14).

9. The reference electrode assembly (10) of any of claims 1 to 8,
further comprising a plastics casing (16; 76).

10. The reference electrode assembly (10) of any of claims 1 to 9,
wherein the reference electrode (22) extends as far as into the storage space (12), but preferably not into the lock space (14).

11. The reference electrode assembly (10) of any of claims 1 to 10,
wherein the reference electrode assembly (10) is adapted to be sterilized by radiation, in particular in the presence of the reference electrolyte (24) and/or when the reference electrode assembly (10) is installed in a disposable container (90) of an electrochemical sensor (100; 200) intended for one-time use.

12. An electrochemical sensor (100; 200), in particular a potentiometric sensor, comprising at least one measuring electrode assembly (15) including a measuring electrode (62), a reference electrode assembly (10) including a reference electrode (22), as well as an arrangement for sensing a potential difference between the measuring electrode (62) and the reference electrode (22), wherein the reference electrode assembly (10) is designed in accordance with any of the preceding claims.

13. The electrochemical sensor (200) of claim 12,
wherein the sensor is designed as double measuring cell including a reference electrode assembly (10) and a separate measuring electrode assembly (50).

14. The electrochemical sensor (200) of claim 12,
wherein the sensor is designed as single-rod measuring cell including a reference electrode assembly (10) and a measuring electrode assembly (50) that are integrated in a common casing (70).

15. The electrochemical sensor (100; 200) of any of claims 12 to 14,
wherein the sensor is designed for sensing the pH value and/or the redox potential and/or the concentrations of an ion species in a liquid process medium (80).

16. The electrochemical sensor (100; 200) of any of claims 12 to 15,
wherein the sensor is designed as disposable measuring cell for one-time use for measuring the pH value, redox potential and/or other measurement variables in a liquid process medium (80).

## Revendications

1. Agencement d'électrode de référence (10) pour un capteur électrochimique (100 ; 200), en particulier pour un capteur potentiométrique, comprenant un compartiment pour des demi-cellules de référence muni d'une électrode de référence (22) qui y est prévue ;
dans lequel le compartiment pour des demi-cellules de référence présente une enceinte de stockage (12) dans laquelle se trouve, en tout cas dans un état d'entreposage de l'agencement d'électrode de référence (10), un électrolyte de référence (24) ; dans lequel le compartiment pour des demi-cellules de référence présente en outre un compartiment (12) faisant office de sas perméable, en tout cas en ce qui concerne le passage de l'électrolyte de référence (24) dans un environnement du compartiment pour des demi-cellules de référence ;
dans lequel, à l'état d'entreposage de l'agencement d'électrode de référence (10), l'enceinte de stockage (12) est séparée du compartiment (14) faisant office de sas, en ce qui concerne le passage de l'électrolyte de référence (24) ;
dans lequel l'agencement d'électrode de référence (10) est réalisé d'une manière telle que l'on peut créer une liaison (32) entre l'enceinte d'entreposage (12) et le compartiment (14) faisant office de sas, perméable pour le passage de l'électrolyte de référence (24) depuis l'enceinte de stockage (12) jusque dans le compartiment (14) faisant office de sas, pour faire passer l'agencement d'électrode référence (10) de l'état d'entreposage à un état d'exploitation.

2. Agencement d'électrode de référence (10) selon la revendication 1, présentant en outre au moins une paroi (28) séparant l'enceinte de stockage (12) du compartiment (14) faisant office de sas, en ce qui concerne le passage de l'électrolyte de référence (24), dans laquelle une ouverture (32) peut être réalisée dans le but de faire passer l'agencement d'électrode de référence (10) de l'état d'entreposage à l'état d'exploitation.

3. Agencement d'électrode de référence (10) selon la revendication 2, présentant en outre un ustensile (30) pour la réalisation de l'ouverture (32) dans la paroi (28), en particulier pour transpercer la paroi (28) ou pour retirer un élément de fermeture prédéterminé dans la paroi (28).

4. Agencement d'électrode de référence (10) selon la revendication 4, dans lequel l'ustensile (30) peut être mis en état d'exploitation dans le cas d'un agencement d'électrode de référence (10) incorporé dans un capteur électrochimique (100 ; 200).

5. Agencement d'électrode de référence (10) selon la revendication 3 ou 4, dans lequel l'ustensile (30) est réalisé sous la forme d'une partie de l'agencement d'électrode de référence (10).

6. Agencement d'électrode de référence (10) selon l'une quelconque des revendications 1 à 5, dans lequel le compartiment (14) faisant office de sas présente une ouverture perméable pour le passage d'un électrolyte de référence (24) à partir du compartiment (14) faisant office de sas jusque dans un environnement de l'agencement d'électrode de référence (10).

7. Agencement d'électrode de référence (10) selon l'une quelconque des revendications 1 à 5, dans lequel le compartiment (14) faisant office de sas présente un diaphragme (26) perméable pour le passage d'un électrolyte de référence (24) à partir du compartiment (14) faisant office de sas jusque dans un environnement de l'agencement d'électrode de référence (10).

8. Agencement d'électrode de référence (10) selon la revendication 7, dans lequel le diaphragme (26) est inséré dans l'ouverture réalisée dans le compartiment (14) faisant office de sas.

9. Agencement d'électrode de référence (10) selon l'une quelconque des revendications 1 à 8, comprenant en outre un logement en matière synthétique (16 ; 76).

10. Agencement d'électrode de référence (10) selon l'une quelconque des revendications 1 à 9, dans lequel l'électrode de référence (22) aboutit dans l'enceinte de stockage (12), mais de préférence n'aboutit pas dans le compartiment (14) faisant office de sas.

11. Agencement d'électrode de référence (10) selon l'une quelconque des revendications 1 à 10, dans lequel l'agencement d'électrode de référence (10) peut être stérilisé par exposition à un rayonnement, en particulier en présence de l'électrolyte de référence (24) et/ou dans le cas d'un agencement d'électrode de référence (10) incorporé dans un récipient (90) de type jetable d'un capteur électrochimique (100 ; 200) destiné à une utilisation unique.

12. Capteur électrochimique (100 ; 200), en particulier capteur potentiométrique comprenant au moins un agencement d'électrode de mesure (50) comprenant une électrode de mesure (62), un agencement d'électrode de référence (10) comprenant une électrode de référence (22) et un agencement pour l'enregistrement d'une différence de potentiel entre l'électrode de mesure (62) et l'électrode de référence (22) ; dans lequel l'agencement d'électrode de référence (10) est réalisé conformément à l'une quelconque des revendications précédentes.

13. Capteur électrochimique (100) selon la revendication 12, dans lequel le capteur est réalisé sous la forme d'une double cellule de mesure comprenant un agencement d'électrode de référence (10) et un agencement d'électrode de mesure séparé (50).

14. Capteur électrochimique (200) selon la revendication 12, dans lequel le capteur est réalisé sous la forme d'une cellule en forme de tige unique comprenant un agencement d'électrode de référence (10) et un agencement d'électrode de mesure (50), intégrés dans un logement commun (70).

15. Capteur électrochimique (100 ; 200) selon l'une quelconque des revendications 12 à 14, dans lequel le capteur est réalisé pour l'enregistrement de la valeur de pH et/ou du potentiel redox et/ou des concentrations d'une variété ionique dans un milieu de traitement liquide (80).

16. Capteur électrochimique (100 ; 200) selon l'une quelconque des revendications 12 à 15, dans lequel le capteur est réalisé sous la forme d'une cellule jetable pour une utilisation unique à des fins de mesure de la valeur du pH, du potentiel redox et/ou d'autres valeurs de mesure dans un milieu de traitement liquide (80).
